# EUROPEAN PATENT APPLICATION

(11) **EP 4 307 172 A1**
(43) Date of publication of application: **17.01.2024**
(21) Application number: 22207321.5
(22) Date of filing: 14.11.2022
(51) Int. Cl.: G06N 3/045, G06N 3/0442, G06N 3/09, G06N 3/084

(54) **DATA INTERPOLATION METHOD AND APPARATUS AND STORAGE MEDIUM**

(30) Priority: 15.07.2022 CN 202210829727
(71) Applicant: China Three Gorges Co., Ltd., Wuhan Hubei 430010 (CN)
(72) Inventor: ZHANG, Ziliang, Wuhan, 430010 (CN); MA, Baolin, Wuhan, 430010 (CN); YI, Kan, Wuhan, 430010 (CN); WEN, Renqiang, Wuhan, 430010 (CN); ZHANG, Hao, Wuhan, 430010 (CN); DU, Mengjiao, Wuhan, 430010 (CN); WANG, Hao, Wuhan, 430010 (CN)
(74) Representative: Lavoix

(57) **Abstract**

Disclosed in the present invention are a data interpolation method and apparatus and a storage medium. The method includes: acquiring a wind data sequence to be processed, where the wind data sequence to be processed includes a first data sequence corresponding to a first time period, a blank data sequence corresponding to a second time period, and a second data sequence corresponding to a third time period; cyclically taking values from the first data sequence and the second data sequence in a first time change direction and a second time change direction respectively, and predicting first data and second data corresponding to a target time point within the second time period based on relationships between the respective data values taken from the first data sequence and the second data sequence respectively, to obtain a processed first data sequence and a processed second data sequence; and finally fusing corresponding data values in the first data sequence and the second data sequence based on the target time point, so as to determine data for the blank data sequence. In this solution, blank data is predicted in two time directions, thereby improving the precision of data interpolation, and improving the accuracy of wind resource assessment.

## Description

### TECHNICAL FIELD

The present invention relates to the field of data processing, and in particular, to a data interpolation method and apparatus and a storage medium.

### BACKGROUND

The problem of data missing often occurs in data analysis, and data of a missing part may usually be interpolated by using a data interpolation technique. Data interpolation in the field of offshore wind power is used as an example. Wind resource measurement is an important part of a pre-planning stage of offshore wind farms. Accurate wind resource measurement can effectively reduce the investment and construction costs of wind farms. Wind speed, wind direction, and other data in wind resource measurement need to meet the validity, integrity, appropriateness, and other indicators. In an existing wind resource measurement method, fixed wind measurement towers are established, and the wind speed and wind direction are measured by using wind measurement devices on the towers. Compared with onshore towers, the construction cost of offshore fixed wind measurement towers is high, reaching the order of 10 million towers. With the development of offshore wind power to deep sea, the cost of wind measurement towers further increases.

Floating lidar wind measurement technology is considered as a novel offshore wind measurement technology with great potential for application due to its low cost, recyclability, and flexible deployment, which can significantly reduce the preliminary wind measurement cost of offshore wind farms. However, lidar wind measurement is susceptible to the offshore environment and devices, for example, foggy weather, typhoon, extremely wet weather, device failure, and power shortage, which may easily cause incomplete wind measurement data, data errors, inappropriate data, and other problems. After data governance, data missing for different lengths of time occurs. As a result, the integrity of the data fails to meet indicator requirements, which eventually affects the accuracy of wind resource assessment, and further affects the planning and construction of wind farms. Currently, commonly used data interpolation methods may be categorized into self-interpolation of the same tower, interpolation of different towers, data interpolation through reanalysis, and the like according to different interpolation sources. Based on different interpolation sources, linear, nonlinear or neural network methods may be used to interpolate data. Since lidar wind measurement data often suffers from data missing in layers at all heights, the method of self-interpolation of the same tower cannot be used in this case. In addition, on the sea, a floating lidar is usually the only wind measurement device. As a result, the method of interpolation of different towers cannot be used. The precision of data interpolation through reanalysis depends on the precision of data reanalysis, which is prone to high uncertainty.

### SUMMARY

In view of this, embodiments of the present invention provide a data interpolation method and apparatus, an electronic device, and a storage medium, thereby improving the precision of data interpolation.

According to a first aspect, an embodiment of the present invention provides a data interpolation method, including:
acquiring a wind data sequence to be processed, where the wind data sequence to be processed includes a first data sequence corresponding to a first time period, a blank data sequence corresponding to a second time period, and a second data sequence corresponding to a third time period;
cyclically taking values from the first data sequence in a first time change direction based on a first step size, predicting first data corresponding to a target time point within the second time period based on relationships between the respective data values taken from the first data sequence, and adding the first data into the first data sequence, to update the first data sequence to obtain a processed first data sequence, where
cyclically taking values from the second data sequence in a second time change direction based on a second step size, predicting second data corresponding to the target time point within the second time period based on relationships between the respective data values taken from the second data sequence, and adding the second data into the second data sequence, to update the second data sequence to obtain a processed second data sequence; and
fusing corresponding data values in the first data sequence and the second data sequence based on the target time point, so as to determine data for the blank data sequence.

In the data interpolation method provided in this embodiment of the present invention, values are cyclically taken from the first data sequence and the second data sequence in a first time change direction and a second time change direction respectively, first data and second data corresponding to a target time point within the second time period are predicted based on relationships between the respective data values taken from the first data sequence and the second data sequence respectively, to obtain a processed first data sequence and a processed second data sequence, and finally corresponding data values in the first data sequence and the second data sequence are fused based on the target time point, so as to determine data for the blank data sequence. Blank data is interpolated by using a bidirectional prediction method, and no other reference data is required, thereby improving the precision of data interpolation, and improving the accuracy of wind resource assessment.

With reference to the first aspect, in an implementation, the step of cyclically taking values from the first data sequence in a first time change direction based on a first step size, predicting first data corresponding to a target time point within the second time period based on relationships between the respective data values taken from the first data sequence, and adding the first data into the first data sequence, to update the first data sequence to obtain a processed first data sequence includes:
taking values from the first data sequence in the first time change direction based on the first step size, to acquire a first target data sequence in the first data sequence;
inputting the first target data sequence into a preset first time sequence model, and performing prediction based on relationships between data values in the first target data sequence, to determine the first data corresponding to the target time point within the second time period; and
adding the first data into the first data sequence, to update the first data sequence to obtain the processed first data sequence.

With reference to the first aspect, in an implementation, the step of adding the first data into the first data sequence, to update the first data sequence to obtain the processed first data sequence includes:
adding the first data corresponding to the target time point within the second time period into the first data sequence, to obtain an updated first data sequence;
cyclically taking values from the updated first data sequence in the first time change direction based on the first step size, to acquire an updated first target data sequence in the updated first data sequence; and
inputting the updated first target data sequence in the updated first data sequence into the preset first time sequence model, and performing prediction based on the relationships between data values in the updated first target data sequence, so as to update the first data sequence.

With reference to the first aspect, in an implementation, the step of cyclically taking values from the second data sequence in a second time change direction based on a second step size, predicting second data corresponding to the target time point within the second time period based on relationships between the respective data values taken from the second data sequence, and adding the second data into the second data sequence, to update the second data sequence to obtain a processed second data sequence includes:
taking values from the second data sequence in the second time change direction based on the second step size, to acquire a second target data sequence in the second data sequence;
inputting the second target data sequence into a preset second time sequence model, and performing prediction based on relationships between data values in the second target data sequence, to determine the second data corresponding to the target time point within the second time period; and
adding the second data into the second data sequence, to update the second data sequence to obtain the processed second data sequence.

With reference to the first aspect, in an implementation, the step of adding the second data into the second data sequence, to update the second data sequence to obtain the processed second data sequence includes:
adding the second data corresponding to the target time point within the second time period into the second data sequence, to obtain an updated second data sequence;
cyclically taking values from the updated second data sequence in the second time change direction based on the second step size, to acquire an updated second target data sequence in the updated second data sequence; and
inputting the updated second target data sequence in the updated second data sequence into the preset second time sequence model, and performing prediction based on the relationships between data values in the updated second target data sequence, so as to update the second data sequence.

With reference to the first aspect, in an implementation, the step of fusing corresponding data values in the first data sequence and the second data sequence based on the target time point, so as to determine data for the blank data sequence includes:
respectively acquiring first corresponding data in the updated first data sequence and second corresponding data in the updated second data sequence based on the target time point; and
fusing the first corresponding data and the second corresponding data, to determine the data for the blank data sequence.

According to a second aspect, an embodiment of the present invention provides a data interpolation apparatus, including:
a data acquisition module, configured to acquire a wind data sequence to be processed, where the wind data sequence to be processed includes a first data sequence corresponding to a first time period, a blank data sequence corresponding to a second time period, and a second data sequence corresponding to a third time period;
a first update module, configured to cyclically take values from the first data sequence in a first time change direction based on a first step size, predict first data corresponding to a target time point within the second time period based on relationships between the respective data values taken from the first data sequence, and add the first data into the first data sequence, to update the first data sequence to obtain a processed first data sequence, where
a second update module, configured to cyclically take values from the second data sequence in a second time change direction based on a second step size, predict second data corresponding to the target time point within the second time period based on relationships between the respective data values taken from the second data sequence, and add the second data into the second data sequence, to update the second data sequence to obtain a processed second data sequence; and
a blank data determination module, configured to fuse corresponding data values in the first data sequence and the second data sequence based on the target time point, so as to determine data for the blank data sequence.

With reference to the first aspect, in an implementation, the first update module includes:
a first value-taking subunit, configured to take values from the first data sequence in the first time change direction based on the first step size, to acquire a first target data sequence in the first data sequence;
a first data determination subunit, configured to input the first target data sequence into a preset first time sequence model, and perform prediction based on relationships between data values in the first target data sequence, to determine the first data corresponding to the target time point within the second time period; and
a first data sequence determination subunit, configured to add the first data into the first data sequence, to update the first data sequence to obtain the processed first data sequence.

According to a third aspect, the embodiments of the present invention provide an electronic device, including: a memory and a processor, where the memory and the processor are in communication connection with each other, the memory stores computer instructions, and the processor is configured to execute the computer instructions to perform the data interpolation method in the first aspect or any implementation of the first aspect.

According to a fourth aspect, the embodiments of the present invention provide a computer-readable storage medium, with computer instructions stored therein, where the computer instructions are used for causing a computer to perform the data interpolation method in the first aspect or any implementation of the first aspect.

### BRIEF DESCRIPTION OF THE DRAWING

To describe the technical solutions in specific embodiments of the present invention or the prior art more clearly, the following briefly introduces the accompanying drawings required for describing the specific embodiments or the prior art. Apparently, the accompanying drawings in the following description show some embodiments of the present invention, and a person of ordinary skill in the art may still derive other drawings from these accompanying drawings without creative efforts.
FIG. 1 is a flowchart of a data interpolation method according to an embodiment of the present invention;
FIG. 2 is a schematic diagram of a data interpolation method according to an embodiment of the present invention;
FIG. 3 is a schematic diagram of a process of a data interpolation method according to an embodiment of the present invention;
FIG. 4 is a schematic structural diagram of a long short-term memory (LSTM) neural network model according to an embodiment of the present invention;
FIG. 5 is a diagram of a wind speed interpolation result according to an embodiment of the present invention;
FIG. 6 is a diagram of a wind direction interpolation result according to an embodiment of the present invention;
FIG. 7 is a structural block diagram of a data interpolation apparatus according to an embodiment of the present invention; and
FIG. 8 is a schematic diagram of a hardware structure of an electronic device according to an embodiment of the present application.

### DETAILED DESCRIPTION OF THE EMBODIMENTS

To make the objectives, technical solutions, and advantages of the embodiments of the present invention clearer, the following clearly and completely describes the technical solutions in embodiments of the present invention with reference to the accompanying drawings in embodiments of the present invention. Apparently, the described embodiments are some rather than all of the embodiments of the present invention. All other embodiments obtained by persons skilled in the art based on the embodiments of the present invention without creative efforts shall fall within the protection scope of the present invention.

During analysis of data, data missing is common due to human or natural causes. In such cases, it is necessary to process missing data and replace the missing data with appropriate data. Wind resource data collected by an offshore lidar is used as an example. A lidar wind measurement device is easily susceptible to fog, typhoon, extremely wet weather as well as device failure and power shortage, resulting in incomplete, missing or inappropriate obtained wind data, to further cause missing wind data and affect the accuracy of wind resource assessment.

According to the embodiments of the present invention, an embodiment of a data interpolation method is provided. It needs to be noted that the steps illustrated in the flowchart of the accompanying drawings may be performed in a computer system such as a set of computer-executable instructions, and that, although a logical sequence is shown in the flowchart, in some cases the steps shown or described may be performed in an order different from that shown herein.

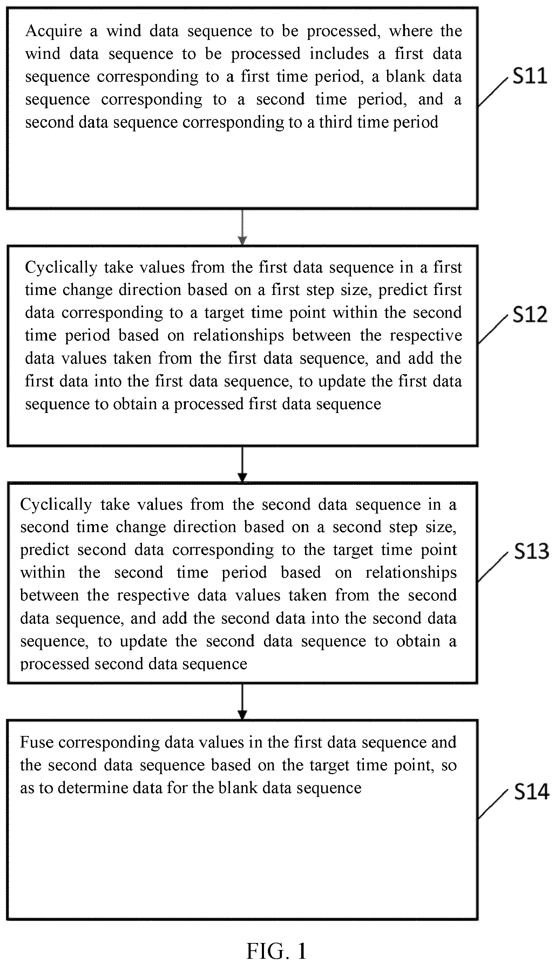

This embodiment provides a data interpolation method, which may be applied to a mobile terminal such as a mobile phone, a computer, and a tablet computer. FIG. 1 is a flowchart of a data interpolation method according to an embodiment of the present invention. As shown in FIG. 1, the procedure includes the following steps.

S11: Acquire a wind data sequence to be processed, where the wind data sequence to be processed includes a first data sequence corresponding to a first time period, a blank data sequence corresponding to a second time period, and a second data sequence corresponding to a third time period.

Two neural network models used for data interpolation are trained, and wind data within a blank time period is interpolated by using wind data within time periods in two directions respectively. The wind data may be wind speed data and wind direction data acquired by using an offshore floating lidar. The wind data sequence is formed according to a preset time interval within a period of time. Wind speed and wind direction have characteristics such as randomness and undulatory property. An LSTM is a dedicated neural network used for solving time sequence data analysis and has an advanced nonlinear mapping capability. Through parameter sharing, the models can extend to various forms and have certain generalization. Therefore, a forward LSTM neural network model and a backward LSTM neural network model may be used.

After wind data collected by a device such as a radar is acquired, wind data within a period of time is divided according to a preset proportion, and the data is divided into a training set and a test set. The training set is used for training a data interpolation model. The test set is used for detecting the goodness of fit of the data interpolation model. Because a time sequence needs to be continuous, data within a former period of time may be set as the training set, and data within a latter period of time may be set to the test set. The wind data sequence to be processed is the test set. Before the data is divided, all data is normalized, thereby reducing error of the data interpolation model and increasing the convergence speed of the models. A min-max normalization method may be used, and is not specifically limited.

After the wind data sequence to be processed is obtained through division, the wind data sequence to be processed is divided. The wind data sequence to be processed includes three time periods. A first time period and a third time period respectively correspond to a first data sequence and a second data sequence. There is missing data within a second time period between the first time period and the third time period. To interpolate a blank data sequence within the second time period, based on a total duration of the second time period, a time step size of the first time period and a time step size of the third time period are set, which are respectively a first step size and a second step size. The time step size refers to a length of time of wind data that needs to be used to interpolate one piece of wind data in the blank data sequence. The time step size affects a length of time of data that can be interpolated. Therefore, during the setting of the time step size, a duration for which interpolation is required, that is, a duration of the second time period, needs to be considered. According to experience, the time step size may be set to be more than 1.5 times the duration of the second time period. A specific setting is not limited.

S12: Cyclically take values from the first data sequence in a first time change direction based on a first step size, predict first data corresponding to a target time point within the second time period based on relationships between the respective data values taken from the first data sequence, and add the first data into the first data sequence, to update the first data sequence to obtain a processed first data sequence.

The first time change direction may be a forward time change. Values are cyclically taken from the first data sequence in the first time change direction based on the first step size. Because time intervals in a data sequence are consistent, in a case that the time intervals and the first step size are determined, a quantity of the data values taken from the first data sequence is fixed. The target time point is a time point at which blank data is located. Specifically, the first blank data within the second time period is predicted according to the relationships between data values in the taken data values. After the data is obtained, the data is added to the first data sequence, to update the first data sequence. When values are taken a next time, values are taken from the updated first data sequence based on the first step size, and the second blank data within the second time period is predicted according to the acquired data, until all blank data within the second time period are predicted according to the first data sequence in a forward time order. In the data prediction method, the acquired data may be processed based on a pretrained data interpolation model. The data interpolation model performs analysis on the data, to output a predicted next value.

S13: Cyclically take values from the second data sequence in a second time change direction based on a second step size, predict second data corresponding to the target time point within the second time period based on relationships between the respective data values taken from the second data sequence, and add the second data into the second data sequence, to update the second data sequence to obtain a processed second data sequence.

The second time change direction is opposite to the first time change direction. If the first time change direction is a forward time change, the second time change direction is a time change in an opposite direction. Values are cyclically taken from the second data sequence in the second time change direction based on the second step size. Because time intervals in a data sequence are consistent, in a case that the time intervals and the second step size are determined, a quantity of the data values taken from the second data sequence is fixed. The target time point is a time point at which blank data is located. Specifically, the last blank data within the second time period is predicted according to the relationships between data values in the taken data values. After the data is obtained, the data is added to the second data sequence, to update the second data sequence. When values are taken a next time, values are taken from the updated second data sequence based on the second step size, and the second last blank data within the second time period is predicted according to the acquired data, until all blank data within the second time period are sequentially predicted according to the second data sequence in a reverse time order. In the data prediction method, the acquired data may be processed based on a pretrained data interpolation model. The data interpolation model performs analysis on the data, to output a predicted next value.

S14: Fuse corresponding data values in the first data sequence and the second data sequence based on the target time point, so as to determine data for the blank data sequence.

In the first data sequence and the second data sequence, according to different time directions, a blank data sequence within the second time period after the first time period is acquired in the forward direction, and a blank data sequence within the second time period before the third time period is acquired in the opposite direction, and the two pieces of data obtained through prediction in the two directions are respectively added to the first data sequence and the second data sequence. Time points of the two pieces of data obtained through prediction overlap. That is, there are two pieces of data at the moment at which the blank data sequence is located. The time point at which the blank data sequence is located is the target time point. The two pieces of data respectively obtained through prediction by using the first data sequence and the second data sequence at the same target time point are fused. For example, an average value of the two pieces of data is calculated, so as to determine each piece of data at the target time point, that is, the data in the blank data sequence.

In the data interpolation method provided in this embodiment of the present invention, values are cyclically taken from the first data sequence and the second data sequence in a first time change direction and a second time change direction respectively, first data and second data corresponding to a target time point within the second time period are predicted based on relationships between the respective data values taken from the first data sequence and the second data sequence respectively, to obtain a processed first data sequence and a processed second data sequence, and finally corresponding data values in the first data sequence and the second data sequence are fused based on the target time point, so as to determine data for the blank data sequence. Blank data is interpolated by using a bidirectional prediction method, and no other reference data is required, thereby improving the precision of data interpolation, and improving the accuracy of wind resource assessment.

This embodiment provides a method for updating the first data sequence, corresponding to S12 in FIG. 1. The method includes the following steps:
S121: Take values from the first data sequence in the first time change direction based on the first step size, to acquire a first target data sequence in the first data sequence.

The first step size refers to a length of time of wind data that needs to be used to interpolate one piece of wind data in the blank data sequence. The first step size is related to a total duration of a blank time period that requires interpolation, that is, a duration of the second data sequence. In addition, data intervals in a data sequence are fixed. Therefore, in a case that the first step size and the data intervals are determined, a quantity of pieces of data in a data sequence for predicting data is fixed. The first time change direction may be a forward time change.

S 122: Input the first target data sequence into a preset first time sequence model, and perform prediction based on relationships between data values in the first target data sequence, to determine the first data corresponding to the target time point within the second time period.

The preset first time sequence model may be a pretrained data interpolation model, and an LSTM neural network model may be used. The first target data sequence is inputted into the pretrained first time sequence model. The first time sequence model processes data to predict data corresponding to the first time point within the second time period. Because the first time period and the second time period are continuous time periods, the first time point within the second time period is a next time point of a time point corresponding to the last piece of data in the first target data sequence. The target time point is the first time point within the second time period.

S 123: Add the first data corresponding to the target time point within the second time period into the first data sequence, to obtain an updated first data sequence.

The data within the second time period acquired in S122 is added to the first data sequence, to update the first data sequence.

S 124: Cyclically take values from the updated first data sequence in the first time change direction based on the first step size, to acquire an updated first target data sequence in the updated first data sequence.

Values are taken from the updated first data sequence according to the first step size. To acquire data corresponding to a next moment within the second time period, according to the first step size, the values are taken for the first target data sequence start from a former time point of a time point corresponding to the first blank data within the second time period, so as to update the first target data sequence.

The cyclically taking values refers to that after data corresponding to the target time point within the second time period is predicted according to the first target data sequence, the acquired data is added to the first data sequence, and the first target data sequence is updated according to the first step size, to ensure that a time point corresponding to the last data in the updated first target sequence is a previous time point of the target time point within the second time period.

S125: Input the updated first target data sequence in the updated first data sequence into the preset first time sequence model, and perform prediction based on the relationships between data values in the updated first target data sequence, so as to update the first data sequence.

The updated first data sequence is inputted into the preset first time sequence model, to predict the data corresponding to the target time point within the second time period, and then the acquired data is added to the first data sequence, until all data at target moments within the second time period are predicted. These data are added to the first data sequence, so as to update the first data sequence.

This embodiment provides a method for updating the second data sequence, corresponding to S13 in FIG. 1. The method includes the following steps:
S131: Take values from the second data sequence in the second time change direction based on the second step size, to acquire a second target data sequence in the second data sequence.

The second step size refers to a length of time of wind data that needs to be used to interpolate one piece of wind data in the blank data sequence. The second step size is related to a total duration of a blank time period that requires interpolation, that is, a duration of the second data sequence. In addition, data intervals in a data sequence are fixed. Therefore, in a case that the second step size and the data intervals are determined, a quantity of pieces of data in a data sequence for predicting data is fixed. The second time direction may be a backward time change. That is, the data within the second time period is predicted according to data within the third time period after the second time period. The data within the third time period used for prediction is the second target data sequence.

S 132: Input the second target data sequence into a preset second time sequence model, and perform prediction based on relationships between data values in the second target data sequence, to determine the second data corresponding to the target time point within the second time period.

The preset second time sequence model may be a pretrained data interpolation model, and an LSTM neural network model may be used. The second target data sequence is inputted into the pretrained second time sequence model. The second time sequence model processes data to predict data corresponding to the last time point within the second time period. Because the second time period and the third time period are continuous time periods, the last time point within the second time period is a previous time point of a time point corresponding to the first piece of data in the first target data sequence. The target time point is the last time point within the second time period.

S133: Add the second data corresponding to the target time point within the second time period into the second data sequence, to obtain an updated second data sequence.

The data within the second time period acquired in S132 is added to the second data sequence, to update the second data sequence.

S 134: Cyclically take values from the updated second data sequence in the second time change direction based on the second step size, to acquire an updated second target data sequence in the updated second data sequence.

Values are taken from the updated second data sequence according to the second step size. To acquire data corresponding to a next moment within the second time period, according to the second step size, the values are taken for the second target data sequence start from a former time point of a time point corresponding to the last blank data within the second time period, so as to update the second target data sequence.

The cyclically taking values refers to that after data corresponding to the target time point within the second time period is predicted according to the second target data sequence, the acquired data is added to the second data sequence, and the second target data sequence is updated according to the second step size, to ensure that a time point corresponding to the first data in the updated second target sequence is a next time point of the target time point within the second time period.

S135: Input the updated second target data sequence in the updated second data sequence into the preset second time sequence model, and perform prediction based on the relationships between data values in the updated second target data sequence, so as to update the second data sequence.

The updated second data sequence is inputted into the preset second time sequence model, to predict the data corresponding to the target time point within the second time period, and then the acquired data is added to the second data sequence, until all data at target moments within the second time period are predicted. These data are added to the second data sequence, so as to update the second data sequence.

This embodiment provides a method for determining data for the blank data sequence, corresponding to S14 in FIG. 1. The method includes the following steps:
S141: Respectively acquire first corresponding data in the updated first data sequence and second corresponding data in the updated second data sequence based on the target time point.

The target time point is a time point corresponding to the blank data sequence within the second time period. Two pieces of data that are respectively acquired according to the first data sequence and the second data sequence and correspond to the same time point within the second time period are respectively the first corresponding data and the second corresponding data.

S142: Fuse the first corresponding data and the second corresponding data, to determine the data for the blank data sequence.

To ensure the accuracy of predicted blank data, two pieces of data corresponding to the same time point may be fused, for example, an average value may be calculated, so as to determine data corresponding to the time point, thereby determining the data in the blank data sequence.

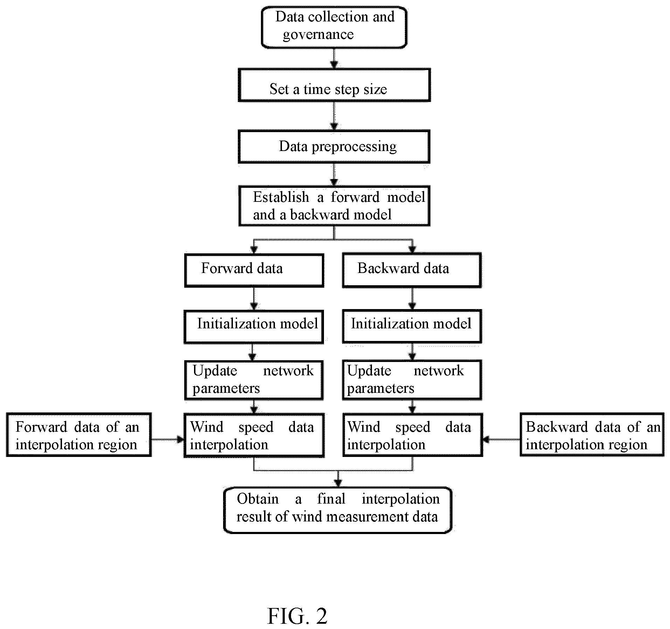

Referring to FIG. 2, FIG. 2 is a schematic diagram of a data interpolation method according to an embodiment of the present invention. Before a blank data sequence is predicted, data is first collected and governed. A data set to be interpolated of an offshore floating lidar needs to be collected. For offshore wind power, wind measurement data at a hub height of a wind turbine usually needs to be collected. After data is collected, data reasonableness is checked, and unreasonable data is eliminated. Subsequently, a time step size is set according to a duration of a required second time period. After the time step size is determined, the acquired data is preprocessed, which includes dividing the data according to a certain proportion, to divide the data into a training set and a data set. The training set is used for training a model. The test set is used for checking the goodness of fit of a model.

After the data is prepared, a forward model and a backward model, that is, a first time sequence model and a second time sequence model, are established. The two models are respectively a forward LSTM neural network model and a backward LSTM neural network model. The forward LSTM neural network model predicts data within the second time period according to data within the first time period. The backward LSTM neural network model predicts data within the second time period according to data within the third time period. After the models are constructed, the models are initialized, thereby reducing final error results of the models.

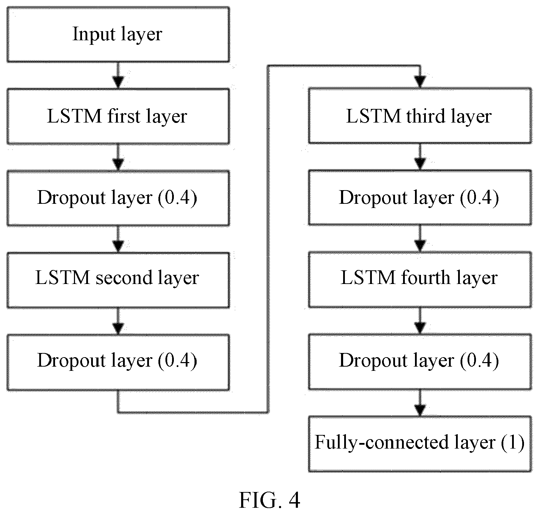

The two LSTM neural network models have the same parameters and network structure. As shown in FIG. 4, the structure includes an LSTM network layer and a dropout layer. Four LSTM network layers are superimposed to extract time sequence information from the wind measurement data, to predict wind measurement data at a next moment. The Dropout layer randomly deletes some network branches, to reduce the complexity of the models, thereby avoiding model overfitting. Training is performed by using a mini-batch (batch size) random gradient descent method. The mini-batch random gradient descent uses random gradient descent and batch gradient descent, and has a fast convergence speed in a large data set.

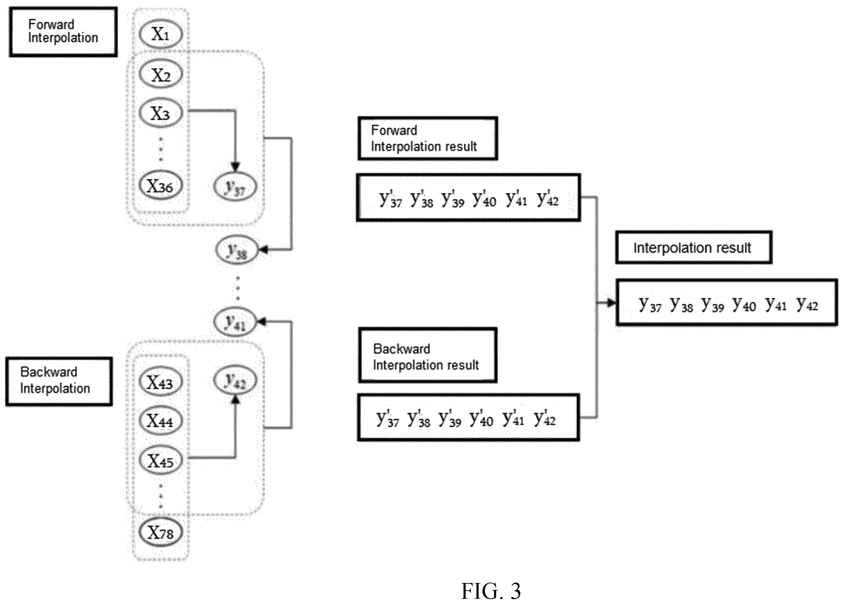

Next, blank wind speed data is interpolated, respectively forward and backward. An interpolation region is a blank data sequence within the second time period. Specifically, as shown in FIG. 3, the first data sequence is x1-x36, and the second data sequence is x43-x78, the first step size and the second step size are both 36, that is, a next piece of data is predicted according to 36 pieces of data. In a forward interpolation process, the first piece of data y₃₇' in the blank data sequence is first predicted according to x₁-x₃₆, y₃₇' is added to the first data sequence, a value is taken according to the first step size. An updated first data sequence is x₂-x₃₆, y₃₇'. Prediction is performed according to the updated first data sequence, to obtain y₃₈'. Values are cyclically taken backward in sequence, and prediction is performed, until data y₃₇'-y₄₂' corresponding to the blank data sequence is obtained.

In a backward interpolation process, the last piece of data y₄₂" in the blank data sequence is first predicted according to x₄₃-x₇₈, y₄₂" is added to the second data sequence, a value is taken according to the second step size. An updated second data sequence is y₄₂", x₄₃-x₇₇. Prediction is performed according to the updated second data sequence, to obtain y₄₁". Values are cyclically taken forward in sequence, and prediction is performed, until data y₃₇"-y₄₂" corresponding to the blank data sequence is obtained.

The obtained results y₃₇'-y₄₂' and y₃₇"-y₄₂" are fused. For example, average values of two pieces of data at the same moment is calculated, to obtain a final wind measurement data interpolation result. That is, data corresponding to the blank data sequence is y₃₇-y₄₂.

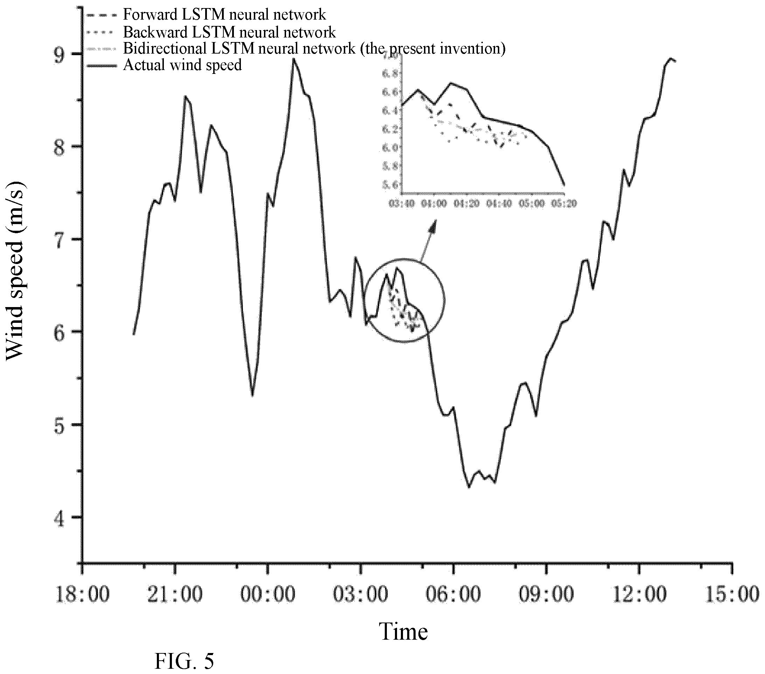

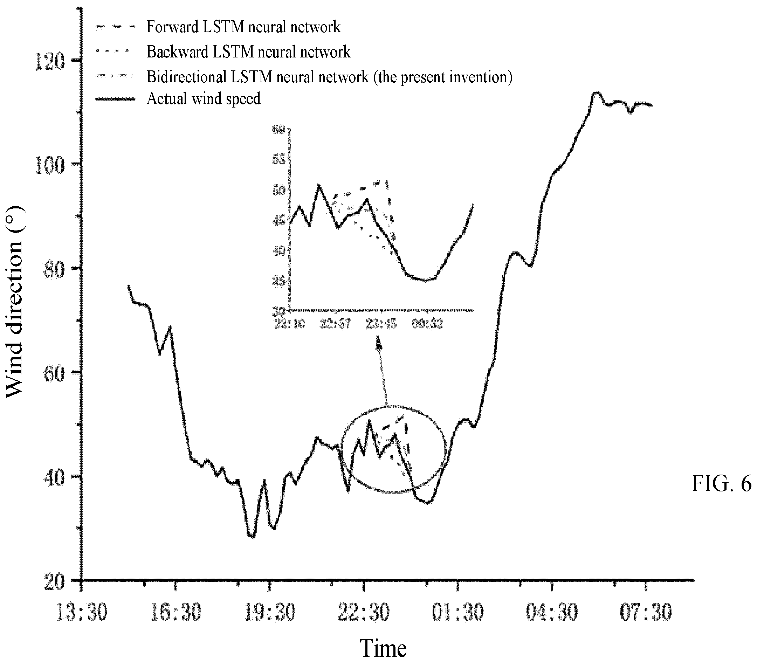

In the method, data within the same time period is respectively interpolated forward and backward by using a forward time sequence model and a backward time sequence model, thereby reducing interpolation errors of the models. FIG. 5 and FIG. 6 respectively show interpolation results of wind speed and wind direction in a case that an interpolation duration is 1 hour. A wind speed error ranges from 0.18 m/s to 0.20 m/s, and a wind direction error ranges from 7° to 9°. Within an appropriate range, the accuracy of the models satisfies the quality requirement of wind measurement data. The results prove that the precision of a result of data interpolation performed by using a bidirectional LSTM neural network in this solution is higher than that by using only a forward LSTM neural network or using only a backward LSTM neural network. It needs to be noted that the interpolation errors of the models tend to increase as the interpolation duration increases. The solution satisfies the integrity requirement of wind measurement data in wind resource evaluation, so that the accuracy of data interpolation is high, and the accuracy of wind resource evaluation can be improved. In addition, the solution does not require data of other reference wind measurement apparatuses, and is applicable to the development environment of offshore wind power.

This embodiment further provides a data interpolation apparatus. The apparatus is configured to implement the above embodiments and preferred embodiments, which have been described and are not described in detail again. As used below, the term "module" may be a combination of software and/or hardware that implements a predetermined function. Although the apparatuses described in the following embodiments are preferably implemented in software, implementations of hardware, or combinations of software and hardware, are also possible and conceivable.

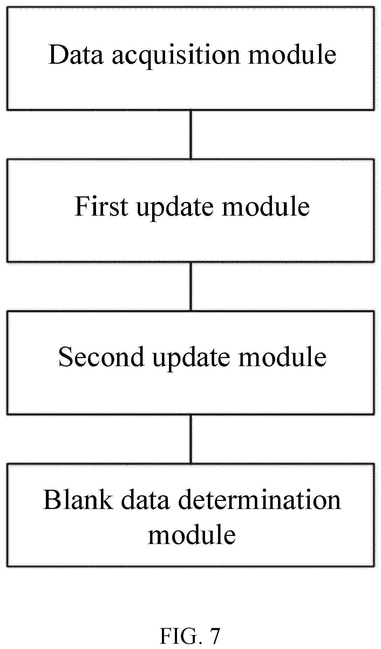

This embodiment provides a data interpolation apparatus. As shown in FIG. 7, the apparatus includes:
a data acquisition module, configured to acquire a wind data sequence to be processed, where the wind data sequence to be processed includes a first data sequence corresponding to a first time period, a blank data sequence corresponding to a second time period, and a second data sequence corresponding to a third time period;
a first update module, configured to cyclically take values from the first data sequence in a first time change direction based on a first step size, predict first data corresponding to a target time point within the second time period based on relationships between the respective data values taken from the first data sequence, and add the first data into the first data sequence, to update the first data sequence to obtain a processed first data sequence, where
a second update module, configured to cyclically take values from the second data sequence in a second time change direction based on a second step size, predict second data corresponding to the target time point within the second time period based on relationships between the respective data values taken from the second data sequence, and add the second data into the second data sequence, to update the second data sequence to obtain a processed second data sequence; and
a blank data determination module, configured to fuse corresponding data values in the first data sequence and the second data sequence based on the target time point, so as to determine data for the blank data sequence.

In an implementation, the first update module includes:
a first value-taking subunit, configured to take values from the first data sequence in the first time change direction based on the first step size, to acquire a first target data sequence in the first data sequence;
a first data determination subunit, configured to input the first target data sequence into a preset first time sequence model, and perform prediction based on relationships between data values in the first target data sequence, to determine the first data corresponding to the target time point within the second time period; and
a first data sequence determination subunit, configured to add the first data into the first data sequence, to update the first data sequence to obtain the processed first data sequence.

In an implementation, the first data sequence determination subunit is further configured to:
adding the first data corresponding to the target time point within the second time period into the first data sequence, to obtain an updated first data sequence;
cyclically taking values from the updated first data sequence in the first time change direction based on the first step size, to acquire an updated first target data sequence in the updated first data sequence; and
inputting the updated first target data sequence in the updated first data sequence into the preset first time sequence model, and performing prediction based on the relationships between data values in the updated first target data sequence, so as to update the first data sequence.

In an implementation, the second update module includes:
a second value-taking subunit, configured to take values from the second data sequence in the second time change direction based on the second step size, to acquire a second target data sequence in the second data sequence;
a second data determination subunit, configured to: input the second target data sequence into a preset second time sequence model, and perform prediction based on relationships between data values in the second target data sequence, to determine the second data corresponding to the target time point within the second time period; and
a second data sequence determination subunit, configured to add the second data into the second data sequence, to update the second data sequence to obtain the processed second data sequence.

In an implementation, the second data sequence determination subunit is further configured to:
adding the second data corresponding to the target time point within the second time period into the second data sequence, to obtain an updated second data sequence;
cyclically taking values from the updated second data sequence in the second time change direction based on the second step size, to acquire an updated second target data sequence in the updated second data sequence; and
inputting the updated second target data sequence in the updated second data sequence into the preset second time sequence model, and performing prediction based on the relationships between data values in the updated second target data sequence, so as to update the second data sequence.

In an implementation, the blank data determination module is further configured to:
respectively acquire first corresponding data in the updated first data sequence and second corresponding data in the updated second data sequence based on the target time point; and
fuse the first corresponding data and the second corresponding data, to determine the data for the blank data sequence.

The data interpolation apparatus in this embodiment is presented in the form of a functional unit. The unit refers to an ASIC circuit, a processor and a memory executing one or more software or fixed programs, and/or other devices that can provide the above functions.

Further functional descriptions of each of the above modules are identical to the corresponding embodiments described above, and details are not be described herein.

Embodiments of the present invention further provide an electronic device, including the foregoing data interpolation apparatus shown in FIG. 7.

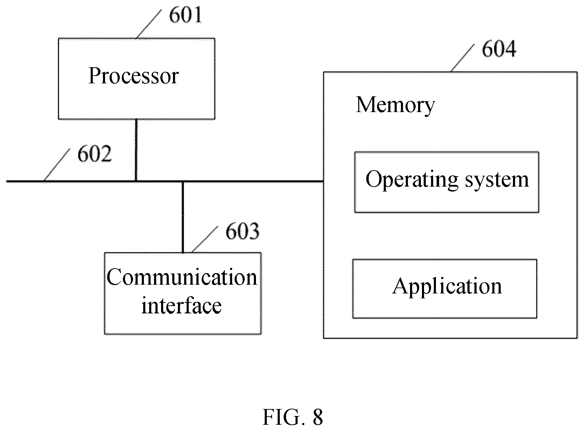

Referring to FIG. 8, FIG. 8 is a schematic structural diagram of an electronic device according to an optional embodiment of the present invention. As shown in FIG. 8, the electronic device may include: at least one processor 601, for example, a central processing unit (CPU), at least one communication interface 603, a memory 604, a at least one communication bus 602. The communication bus 602 is configured to implement a connective communication between these components. The communication interface 603 may include a display and a keyboard. Optionally, the communication interface 603 may further include a standard wired interface and a standard wireless interface. The memory 604 may be a high-speed RAM memory (a volatile RAM), or a non-volatile memory, for example, at least one disk memory. The memory 604 may be optionally at least one storage device located away from the foregoing processor 601. The processor 601 may incorporate the apparatus described in FIG. 7. An application program is stored in the memory 604. The processor 601 calls program code stored in the memory 604 for use in performing any of the method steps described above.

The communication bus 602 may be, for example, a peripheral component interconnect (PCI) bus or an extended industry standard architecture (EISA) bus. The communication bus 602 may be an address bus, a data bus, a control bus or the like. For ease of representation, the bus is only represented by one thick line in FIG. 7, but it does not mean that there is only one bus or one type of bus.

The memory 604 may include a volatile memory, for example, a random access memory (RAM). The memory may include a non-volatile memory, for example, a flash memory, a hard disk drive (HDD), or a solid-state drive (SSD). The memory 604 may include a combination of the memories of the foregoing types.

The processor 601 may be a CPU, a network processor (NP), or a combination of a CPU and an NP.

The processor 601 may further include a hardware chip. The hardware chip may be an application-specific integrated circuit (ASIC), a programmable logic device (PLD) or a combination thereof. The PLD may be a complex programmable logic device (CPLD), a field-programmable logic gate array (FPGA), general array logic (GAL) or a combination thereof.

Optionally, the memory 604 is further configured to store program instructions. The processor 601 may call the program instructions to implement the data interpolation method shown in the embodiments of the present application.

Embodiments of the present invention further provide a non-transitory computer storage medium. The computer storage medium stores computer-executable instructions. The computer-executable instructions may perform the data interpolation method of any of the method embodiments described above. The storage medium may be a magnetic disk, an optical disc, a read-only memory (ROM), a RAM, a flash memory, an HDD or an SSD or the like. The storage medium may include a combination of the memories of the foregoing types.

Although the embodiments of the present invention are described in conjunction with the accompanying drawings, various modifications and variations may be made by those skilled in the art without departing from the spirit and scope of the present invention, and such modifications and variations fall within the scope defined by the appended claims.

## Claims

1. A data interpolation method, **characterized by** comprising:
acquiring a wind data sequence to be processed, wherein the wind data sequence to be processed comprises a first data sequence corresponding to a first time period, a blank data sequence corresponding to a second time period, and a second data sequence corresponding to a third time period;
cyclically taking values from the first data sequence in a first time change direction based on a first step size, predicting first data corresponding to a target time point within the second time period based on relationships between the respective data values taken from the first data sequence, and adding the first data into the first data sequence, to update the first data sequence to obtain a processed first data sequence, wherein
the step of cyclically taking values from the first data sequence in a first time change direction based on a first step size, predicting first data corresponding to a target time point within the second time period based on relationships between the respective data values taken from the first data sequence, and adding the first data into the first data sequence, to update the first data sequence to obtain a processed first data sequence comprises:
taking values from the first data sequence in the first time change direction based on the first step size, to acquire a first target data sequence in the first data sequence;
inputting the first target data sequence into a preset first time sequence model, and performing prediction based on relationships between data values in the first target data sequence, to determine the first data corresponding to the target time point within the second time period; and
adding the first data into the first data sequence, to update the first data sequence to obtain the processed first data sequence;
cyclically taking values from the second data sequence in a second time change direction based on a second step size, predicting second data corresponding to the target time point within the second time period based on relationships between the respective data values taken from the second data sequence, and adding the second data into the second data sequence, to update the second data sequence to obtain a processed second data sequence; and
fusing corresponding data values in the first data sequence and the second data sequence based on the target time point, so as to determine data for the blank data sequence.

2. The method according to claim 1, **characterized in that** the step of adding the first data into the first data sequence, to update the first data sequence to obtain the processed first data sequence comprises:
adding the first data corresponding to the target time point within the second time period into the first data sequence, to obtain an updated first data sequence;
cyclically taking values from the updated first data sequence in the first time change direction based on the first step size, to acquire an updated first target data sequence in the updated first data sequence; and
inputting the updated first target data sequence in the updated first data sequence into the preset first time sequence model, and performing prediction based on the relationships between data values in the updated first target data sequence, so as to update the first data sequence.

3. The method according to claim 1, **characterized in that** the step of cyclically taking values from the second data sequence in a second time change direction based on a second step size, predicting second data corresponding to the target time point within the second time period based on relationships between the respective data values taken from the second data sequence, and adding the second data into the second data sequence, to update the second data sequence to obtain a processed second data sequence comprises:
taking values from the second data sequence in the second time change direction based on the second step size, to acquire a second target data sequence in the second data sequence;
inputting the second target data sequence into a preset second time sequence model, and performing prediction based on relationships between data values in the second target data sequence, to determine the second data corresponding to the target time point within the second time period; and
adding the second data into the second data sequence, to update the second data sequence to obtain the processed second data sequence.

4. The method according to claim 3, **characterized in that** the step of adding the second data into the second data sequence, to update the second data sequence to obtain the processed second data sequence comprises:
adding the second data corresponding to the target time point within the second time period into the second data sequence, to obtain an updated second data sequence;
cyclically taking values from the updated second data sequence in the second time change direction based on the second step size, to acquire an updated second target data sequence in the updated second data sequence; and
inputting the updated second target data sequence in the updated second data sequence into the preset second time sequence model, and performing prediction based on the relationships between data values in the updated second target data sequence, so as to update the second data sequence.

5. The method according to claim 1, **characterized in that** the step of fusing corresponding data values in the first data sequence and the second data sequence based on the target time point, so as to determine data for the blank data sequence comprises:
respectively acquiring first corresponding data in the updated first data sequence and second corresponding data in the updated second data sequence based on the target time point; and
fusing the first corresponding data and the second corresponding data, to determine the data for the blank data sequence.

6. A data interpolation apparatus, **characterized by** comprising:
a data acquisition module, configured to acquire a wind data sequence to be processed, wherein the wind data sequence to be processed comprises a first data sequence corresponding to a first time period, a blank data sequence corresponding to a second time period, and a second data sequence corresponding to a third time period;
a first update module, configured to cyclically take values from the first data sequence in a first time change direction based on a first step size, predict first data corresponding to a target time point within the second time period based on relationships between the respective data values taken from the first data sequence, and add the first data into the first data sequence, to update the first data sequence to obtain a processed first data sequence, wherein
the first update module comprises:
a first value-taking subunit, configured to take values from the first data sequence in the first time change direction based on the first step size, to acquire a first target data sequence in the first data sequence;
a first data determination subunit, configured to input the first target data sequence into a preset first time sequence model, and perform prediction based on relationships between data values in the first target data sequence, to determine the first data corresponding to the target time point within the second time period; and
a first data sequence determination subunit, configured to add the first data into the first data sequence, to update the first data sequence to obtain the processed first data sequence;
a second update module, configured to cyclically take values from the second data sequence in a second time change direction based on a second step size, predict second data corresponding to the target time point within the second time period based on relationships between the respective data values taken from the second data sequence, and add the second data into the second data sequence, to update the second data sequence to obtain a processed second data sequence; and
a blank data determination module, configured to fuse corresponding data values in the first data sequence and the second data sequence based on the target time point, so as to determine data for the blank data sequence.

7. An electronic device, **characterized by** comprising:
a memory and a processor, wherein the memory and the processor are in communication connection with each other, the memory stores computer instructions, and the processor is configured to execute the computer instructions to perform the data interpolation method according to any one of claims 1 to 5.

8. A computer-readable storage medium, with computer instructions stored therein, **characterized in that** the computer instructions are used for causing a computer to perform the data interpolation method according to any one of claims 1 to 5.
